# EUROPÄISCHE PATENTANMELDUNG

(11) **EP 3 338 976 A1**
(43) Veröffentlichungstag der Anmeldung: **27.06.2018**
(21) Anmeldenummer: 17205881.0
(22) Anmeldetag: 07.12.2017
(51) Int. Cl.: B27F 1/00, B27M 1/08, B23Q 7/18

(54) **VERFAHREN ZUM AUSRICHTEN EINES WERKSTÜCKS SOWIE AUSRICHTVORRICHTUNG**

(30) Priorität: 20.12.2016 DE 102016225587
(71) Anmelder: HOMAG GmbH, 72296 Schopfloch (DE)
(72) Erfinder: Steeb, Marcel, 72270 Baiersbronn-Mitteltal (DE); Müller, Michael, 72178 Waldachtal (DE); Thumm, Michael, 72149 Neustetten (DE); Sieber, Harald, 72160 Horb a. N. (DE)
(74) Vertreter: Hoffmann Eitle

(57) **Zusammenfassung**

Die Erfindung betrifft ein Verfahren zum Ausrichten eines, vorzugsweise plattenförmigen, Werkstücks. Ferner betrifft die Erfindung eine Ausrichtvorrichtung. Das erfindungsgemäße Verfahren umfasst die folgenden Schritte: Bewegen eines Werkstücks mittels einer Fördereinrichtung in einer Transportrichtung, Ausrichten des bewegten Werkstücks mittels zumindest einer ersten Ausrichteinheit, insbesondere zumindest eines ersten Nockens, an einer ersten Querseite des Werkstücks, und Ausrichten des bewegten Werkstücks an einer zweiten Querseite des Werkstücks.

## Beschreibung

### Technisches Gebiet

Die Erfindung betrifft ein Verfahren zum Ausrichten eines, vorzugsweise plattenförmigen, Werkstücks, das insbesondere zumindest abschnittsweise aus Holz, Holzwerkstoffen, Kunststoff oder dergleichen besteht. Ferner betrifft die Erfindung eine Ausrichtvorrichtung.

### Stand der Technik

Das automatische Zuführen von Werkstücken zwischen die Transportkette und den Oberdruck einer Bearbeitungsmaschine ist in der Möbelindustrie mit entsprechenden Vorrichtungen im Einlaufbereich der Maschine bekannt.

Das Bewegen des Werkstücks zur Maschine hin erfolgt beispielsweise mit Transportelementen, wie Rollenbahnen, Transportvorrichtungen mit Bändern oder dergleichen, die nahezu synchron mit der Transportkette angetrieben sind und sich auf dem Niveau der Maschinentransportkette befinden. Bekannt ist dabei, dass die Transportkette häufig über den Oberdruck hinaus verlängert wird. Auch eine Verlängerung des Oberdrucks ist möglich.

DE 37 37 008 A1 beschreibt eine Vorrichtung zum Beschicken von Maschinen zur Plattenver- und -bearbeitung bei der das Werkstück mit Hilfe von angetriebenen Rollen aufgenommen und an einer definierten Bearbeitungsposition positioniert wird.

Im Dokument DE 101 00 930 A1 wird eine Zuführvorrichtung beschrieben, die für eine Plattenbearbeitungsvorrichtung verwendet wird.

Der genannte Stand der Technik weist jedoch unter anderem eine relativ aufwendige Konstruktion auf, so dass mit relativ hohen Kosten für solche Vorrichtungen zu rechnen ist.

### Gegenstand der Erfindung

Es ist daher Aufgabe der Erfindung, ein Verfahren und eine Vorrichtung der eingangs genannten Art bereitzustellen, die eine platz- und kostensparende Konstruktion zum Zuführen und/oder Ausrichten von Werkstücken ermöglichen.

Diese Aufgabe wird erfindungsgemäß durch ein Verfahren zum Zuführen eines Werkstücks nach Anspruch 1 sowie eine Vorrichtung zum Ausrichten eines Werkstücks nach Anspruch 10 gelöst. Besonders bevorzugte Ausführungsformen der Erfindung sind in den abhängigen Ansprüchen angegeben. Ferner kann die Erfindung eine Bearbeitungsmaschine mit einer Vorrichtung gemäß einem der Ansprüche 10-15 betreffen.

Der Erfindung liegt der Gedanke zugrunde, Werkstücke, die beispielsweise Holz, Holzwerkstoffen, Kunststoff oder dergleichen aufweisen oder zumindest abschnittsweise hieraus bestehen, maß- und/oder winkelgenau zu einer Bearbeitungsmaschine zuzuführen.

Zu diesem Zweck wird erfindungsgemäß ein Verfahren zum Ausrichten eines Werkstücks bereitgestellt. Das erfindungsgemäße Verfahren umfasst die folgenden Schritte: Bewegen eines Werkstücks mittels einer Fördereinrichtung in einer Transportrichtung, Ausrichten des bewegten Werkstücks mittels zumindest einer ersten Ausrichteinheit, insbesondere zumindest eines ersten Nockens, an einer ersten Querseite des Werkstücks (quer zur Transportrichtung), Ausrichten des bewegten Werkstücks an einer zweiten Querseite des Werkstücks (quer zur Transportrichtung).

Es ist bevorzugt, dass die Schritte in der genannten Reihenfolge durchgeführt werden. Ferner ist bevorzugt, dass das Werkstück während der genannten Schritte in Transportrichtung bewegt wird.

Es ist bevorzugt, dass, nach dem Ausrichten an der ersten Querseite, die zumindest eine erste Ausrichteinheit weg von der ersten Querseite des Werkstücks bewegt wird.

In diesem Zusammenhang bedeutet "Querseite" eine zur Bewegungs- und/oder Transportrichtung des Werkstücks quer, beispielsweise senkrecht, verlaufende Seite des Werkstücks.

Die erste Querseite weist bevorzugt in Transportrichtung ("Vorderkante"). Die zweite Querseite weist bevorzugt entgegen der Transportrichtung ("Hinterkante"). Somit ist es bevorzugt vorgesehen, dass das Werkstück zuerst an der Vorderkante, und nachfolgend an der Hinterkante ausgerichtet wird. Gemäß einer weiteren Zielrichtung kann das Werkstück jedoch auch zuerst an der Hinterkante und nachfolgend an der Vorderkante ausgerichtet werden.

Das erfindungsgemäße Verfahren hat unter anderem den Vorteil, dass ein Werkstück in wirtschaftlich effizienter Weise gehandhabt werden kann. Ferner wird eine zuverlässige Ausrichtung des Werkstücks gewährleistet.

Es ist bevorzugt, dass das Werkstück während des Ausrichtens an der ersten und/oder zweiten Querseite ferner zumindest teilweise entlang eines sich in Transportrichtung erstreckenden Lineals oder ähnlichem geführt wird.

Gemäß einer bevorzugten Ausführungsform ist es vorgesehen, dass das Werkstück mit zumindest einer zweiten Ausrichteinheit, insbesondere zumindest einem zweiten Nocken, an der zweiten Querseite ausgerichtet wird. Somit ist für jede Querseite des Werkstücks eine eigene Ausrichteinheit vorgesehen. Auf diese Weise kann eine relativ zügige Ausrichtung an der ersten und zweiten Querseite durchgeführt werden, wobei bevorzugt ist, dass das Werkstück zunächst an der ersten Querseite und nachfolgend an der zweiten Querseite ausgerichtet wird.

Gemäß einer weiteren Ausführungsform der vorliegenden Erfindung wird das Werkstück nach dem Ausrichten an der zweiten Querseite in eine Bearbeitungsmaschine eingeführt. Somit kann das Werkstück nach dem Ausrichten weiter bearbeitet werden.

Ferner kann es vorgesehen sein, dass das Werkstück durch die zumindest eine zweite Ausrichteinheit, insbesondere durch den zumindest einen zweiten Nocken, in die Bearbeitungsmaschine eingeführt wird. Somit wird der zweiten Ausrichteinheit eine weitere Funktion zugewiesen, nämlich das Werkstück gewissermaßen in die Bearbeitungsmaschine einzuschieben.

Gemäß einer weiteren Ausführungsform ist es vorgesehen, dass das Bewegen des Werkstücks mittels mehrerer Fördereinrichtungen erfolgt, die bevorzugt mit einem Antrieb angetrieben sind, wobei die Fördereinrichtungen insbesondere als Förderriemen oder Transportketten ausgebildet sind. Die Förderriemen oder Transportketten können dabei nebeneinander angeordnet sein. Die Fördereinrichtungen können die gleiche Länge aufweisen, wobei gemäß einer Modifikation ein oder mehrere Fördereinrichtungen länger oder kürzer als die übrigen Fördereinrichtungen ausgebildet sind. Wird ein gemeinsamer Antrieb verwendet, so wird sichergestellt, dass die Fördereinrichtungen synchron arbeiten.

Gemäß einer weiteren Variante ist es vorgesehen, dass die Werkstücke in der Bearbeitungsmaschine an der Oberseite und/oder Unterseite bearbeitet werden.

Gemäß einer weiteren Modifikation ist es vorgesehen, dass sich die zumindest eine erste Ausrichteinheit während des Schritts des Bewegens des Werkstücks zunächst langsamer als die Fördereinrichtung (oder Fördereinrichtungen) bewegt, und nach dem Ausrichten an der ersten Querseite die Geschwindigkeit der zumindest einen ersten Ausrichteinheit erfüllt wird. Auf diese Weise wird das Werkstück mittels der Fördereinrichtung bewegt, und läuft somit auf die Ausrichteinheit auf. Nachdem die Ausrichtung stattgefunden hat, wird die Ausrichteinheit vom Werkstück weg bewegt.

Ferner kann es vorgesehen sein, dass zum Ausrichten des Werkstücks an der ersten Querseite zumindest zwei erste Ausrichteinheiten verwendet werden. Zusätzlich oder alternativ ist es bevorzugt, dass zum Ausrichten des Werkstücks an der zweiten Querseite zumindest zwei zweite Ausrichteinheiten verwendet werden. Auf diese Weise wird beispielsweise bei in Querrichtung längeren Werkstücken eine äußerst exakte Ausrichtung ermöglicht.

Gemäß einer bevorzugten Ausführungsform wird das bewegte Werkstück zunächst an einer ersten Querseite, insbesondere der Vorderkante, ausgerichtet, indem die Geschwindigkeit der Fördereinrichtung größer ist als die Geschwindigkeit der ersten Ausrichteinheit. Nach dem Ausrichten an der ersten Querseite wird die Geschwindigkeit der ersten Ausrichteinheit erhöht, so dass diese größer als die Geschwindigkeit der Fördereinrichtung ist. Die zweite Ausrichteinheit, die gemäß dieser Ausführungsform mit der ersten Ausrichteinheit an einem gemeinsamen umlaufenden Riemen oder einer umlaufenden Kette vorgesehen ist, bewegt sich somit in Richtung der zweiten Querseite, insbesondere der Hinterkante, des sich bewegenden Werkstücks. Durch in Kontakt bringen der zweiten Ausrichteinheit an der zweiten Querseite des Werkstücks wird das Werkstück nochmals ausgerichtet. Beim beschriebenen Verfahrensablauf ist es bevorzugt, dass die Geschwindigkeit der Fördereinrichtung konstant bleibt.

Gemäß einer weiteren Ausführungsform ist es auch möglich, das Werkstück zuerst an der zweiten Querseite, insbesondere der Hinterkante, und nachfolgend an der ersten Querseite, insbesondere der Vorderkante, auszurichten.

Ferner betrifft die vorliegende Erfindung eine Ausrichtvorrichtung. Die Ausrichtvorrichtung, oder deren Steuereinrichtung, kann insbesondere zur Durchführung eines Verfahrens gemäß einem der vorangegangenen Aspekte eingerichtet sein. Die Ausrichtvorrichtung umfasst: Eine Fördereinrichtung, insbesondere einen Förderriemen oder eine Transportkette, eine Ausrichteinrichtung, wobei die Ausrichteinrichtung insbesondere einen umlaufenden Riemen oder eine umlaufende Kette umfasst, wobei die Ausrichteinrichtung zum Ausrichten des bewegten Werkstücks an einer ersten Querseite des bewegten Werkstücks und an einer zweiten Querseite des bewegten Werkstücks quer zur Transportrichtung (R) eingerichtet ist.

Es ist bevorzugt, dass die Vorrichtung eine Steuereinrichtung umfasst, die eingerichtet ist, die Bewegungsgeschwindigkeit einer Ausrichteinheit der Ausrichteinrichtung zu ändern. Es ist bevorzugt, dass die Steuereinrichtung eingerichtet oder konfiguriert ist, das zuvor beschriebene Verfahren auszuführen.

Mit der erfindungsgemäßen Ausrichtvorrichtung können u.a. die bereits genannten Vorteile erreicht werden. Insbesondere kann eine Vorrichtung zum sicheren Ausrichten von Werkstücken bei wirtschaftlich optimierter Handhabungsweise bereitgestellt werden.

Bevorzugt umfasst die Ausrichtvorrichtung ferner ein Lineal zum Führen und/oder Ausrichten eines Werkstücks an einer in Transportrichtung verlaufenden Seite des Werkstücks.

Gemäß einer bevorzugten Ausführungsform ist es vorgesehen, dass die Ausrichteinrichtung zumindest einen umlaufenden Riemen oder eine umlaufende Kette umfasst, an dem zumindest eine erste Ausrichteinheit, wie ein erster Nocken, vorgesehen ist. Eine derartige Ausgestaltung lässt sich relativ platzsparend in die Ausrichtvorrichtung integrieren.

Ferner kann es vorgesehen sein, dass am umlaufenden Riemen oder an der umlaufenden Kette eine zweite Ausrichteinheit, wie ein zweiter Nocken vorgesehen ist, wobei bevorzugt ist, dass die erste Ausrichteinheit (der erste Nocken) und die zweite Ausrichteinheit (der zweite Nocken) entlang des umlaufenden Riemens oder der umlaufenden Kette im Wesentlichen gleich beabstandet sind. Auf diese Weise ist es möglich, dass die erste Ausrichteinheit (der erste Nocken) und die zweite Ausrichteinheit (der zweite Nocken) abwechselnd zum Einsatz kommen können.

Es ist bevorzugt, dass die erste Ausrichteinheit bevorzugt zum Ausrichten des bewegten Werkstücks an der ersten Querseite des bewegten Werkstücks und die zweite Ausrichteinheit bevorzugt zum Ausrichten des bewegten Werkstücks an der zweiten Querseite des bewegten Werkstücks eingerichtet ist.

Gemäß einer weiteren Ausführungsform kann es vorgesehen sein, dass mehrere Ausrichteinrichtungen vorgesehen sind, die quer zur Transportrichtung voneinander beabstandet sind. Bspw. können eine Fördereinrichtung und eine Ausrichteinrichtung jeweils paarweise angeordnet sein. Je nach Länge des Werkstücks quer zur Transporteinrichtung kommen somit entsprechende Fördereinrichtungen und Ausrichteinrichtungen zum Einsatz.

Ferner kann es vorgesehen sein, dass die Ausrichteinrichtungen mittels einer gemeinsamen Antriebswelle angetrieben werden. Auf diese Weise werden die Bewegungsgeschwindigkeiten der Ausrichteinrichtungen aufeinander abgestimmt.

Es ist bevorzugt, dass die genannte Steuereinrichtung eingerichtet oder konfiguriert ist, die folgenden Verfahrensschritte auszuführen: Zunächst wird das bewegte Werkstück an einer ersten Querseite, insbesondere der Vorderkante, ausgerichtet, indem die Geschwindigkeit der Fördereinrichtung größer ist als die Geschwindigkeit der ersten Ausrichteinheit. Nach dem Ausrichten an der ersten Querseite wird die Geschwindigkeit der ersten Ausrichteinheit erhöht, so dass diese größer als die Geschwindigkeit der Fördereinrichtung ist. Die zweite Ausrichteinheit, die gemäß dieser Ausführungsform mit der ersten Ausrichteinheit an einem gemeinsamen umlaufenden Riemen oder einer umlaufende Kette vorgesehen ist, bewegt sich in Richtung der zweiten Querseite, insbesondere der Hinterkante, des sich bewegenden Werkstücks. Durch in Kontakt bringen der zweiten Ausrichteinheit an der zweiten Querseite des Werkstücks wird das Werkstück nochmals ausgerichtet. Beim beschriebenen Verfahrensablauf ist es bevorzugt, dass die Geschwindigkeit der Fördereinrichtung konstant bleibt.

Gemäß einer weiteren Ausführungsform ist es auch möglich, das Werkstück zuerst an der zweiten Querseite, insbesondere der Hinterkante, und nachfolgend an der ersten Querseite, insbesondere der Vorderkante, auszurichten.

Ferner kann die vorliegende Erfindung eine Bearbeitungsmaschine mit einer Ausrichtvorrichtung gemäß einem der genannten Aspekte betreffen.

Bei Verwendung eines Riemens als Transportelement der Ausrichteinrichtung und hieran vorgesehenen Nocken wird eine einfache Konfiguration ermöglicht. Darüber hinaus kann durch den Einsatz von mindestens zwei nebeneinander angeordneten Ausrichteinheiten, insbesondere Nocken, ein Werkstück winkel- und/oder maßgenaues ausgerichtet werden. Allerdings ist es auch möglich, lediglich eine Ausrichteinheit beim Ausrichten an einer der Querseiten des Werkstücks einzusetzen. Ferner kann eine Transportkette als Transportelement verwendet werden.

Ferner ist es möglich, dass durch das genannte Verfahren eine Einführhilfe entfallen kann. Hierbei kann die beschriebene zweite Ausrichteinheit zum Einsatz kommen, um das Werkstück an der zweiten Querseite auszurichten und in einem Arbeitsgang in die Bearbeitungsmaschine einzuführen.

Durch das erfindungsgemäße Verfahren kann eine vorteilhafte Übergabe des Werkstücks zu einer Bearbeitungsmaschine oder einer weiteren Transportstrecke in effizienter Weise ermöglicht werden, wenn eine Bearbeitungsmaschine oder eine Transportstrecke entsprechend nachrangig angeordnet ist. Ferner wird eine hohe Produktivität durch einen konstanten Teilefluss gewährleistet.

Bei der Verwendung mehrerer Bänder kann die Führungslänge zum Ausrichten vergrößert werden, sodass die Genauigkeit des Ausrichtvorgangs verbessert wird. Beispielsweise ist es möglich, Werkstücke mit hoher Genauigkeit auszurichten, die in Querrichtung (quer zur Förderrichtung) eine relativ große Breite aufweisen.

### Kurze Beschreibung der bevorzugten Ausführungsform

- Fig. 1: zeigt schematisch eine Draufsicht einer Ausführungsform der erfindungsgemäßen Vorrichtung,
- Fig. 2: zeigt schematisch eine Draufsicht einer weiteren Ausführungsform der erfindungsgemäßen Vorrichtung,
- Fig. 3: a) zeigt schematisch eine Seitenansicht auf Fig.1, b) zeigt schematisch eine Seitenansicht auf Fig.2.

### Detaillierte Beschreibung der bevorzugten Ausführungsform

Bevorzugte Ausführungsformen der Erfindung werden nachfolgend ausführlich unter Bezugnahme auf die begleitenden Zeichnungen beschrieben.

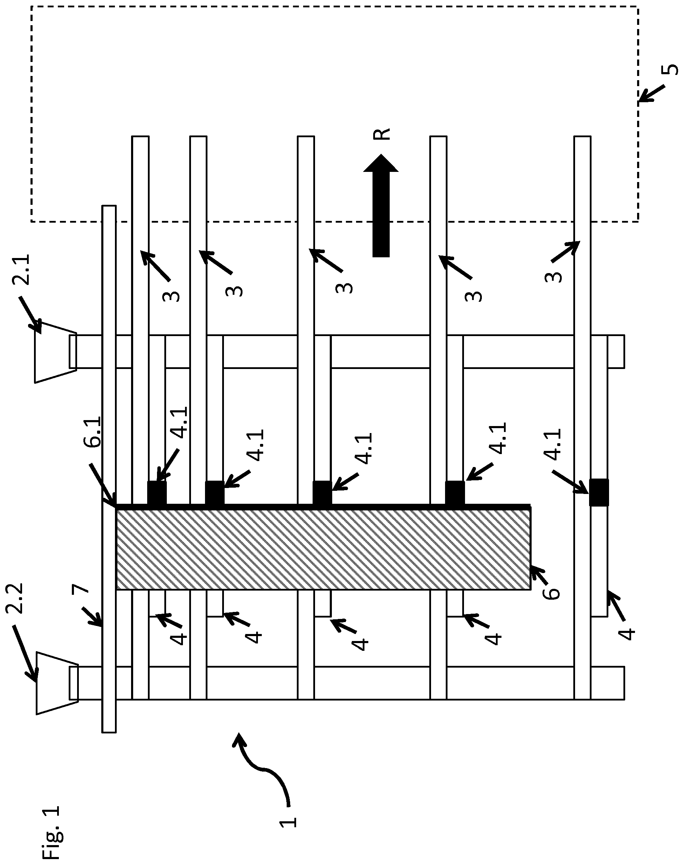

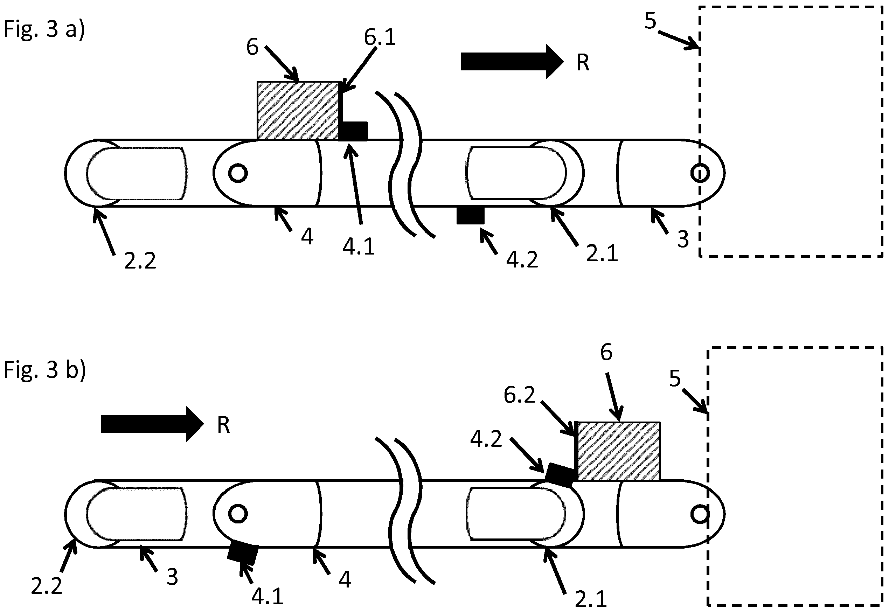

Fig. 1 und Fig. 3 a) zeigen schematisch eine Ausführungsform einer Ausrichtvorrichtung 1 gemäß der vorliegenden Erfindung, wobei Fig. 3 a) eine verkürzte Seitenansicht der Ausführungsform darstellt. Die Ausrichtvorrichtung 1 dient zum Ausrichten von Werkstücken 6, die bevorzugt zumindest abschnittsweise aus Holz, Holzwerkstoffen, Kunstsoff oder dergleichen bestehen. Beispielsweise sind die zu bearbeitenden oder verarbeitenden Werkstücke Vollholzplatten, Spanplatten, MDF-Platten, HDF-Platten, oder ähnliches, die in der Möbel- und Bauelementeindustrie zum Einsatz kommen. Konkret kann es sich um Bauteile wie Fußbodenpaneele, Möbelfronten, Türen, Tischplatten oder Küchenarbeitsplatten handeln.

Im vorliegenden Ausführungsbeispiel wird die Ausrichtvorrichtung 1 als eine Zuführeinrichtung verwendet, mit der Werkstücke in eine Bearbeitungsmaschine 5 gefördert werden. Die Ausrichtvorrichtung 1 umfasst mehrere in einer Transportrichtung R verlaufende Fördereinrichtungen 3, die quer zur Transportrichtung R beabstandet angeordnet sind. Ferner umfasst die Ausrichtvorrichtung 1 mehrere Ausrichteinrichtungen 4, die in der vorliegenden Ausführungsform als umlaufende/endlose Riemen ausgebildet sind. Alternativ können anstelle von Riemen Transportketten zum Einsatz kommen.

Jede der umlaufenden Ausrichteinrichtung 4 weist zwei Nocken 4.1, 4.2 auf, die, bevorzugt im gleichen Abstand, an der jeweiligen Ausrichteinrichtung 4 vorgesehen sind. Die Nocken 4.1, 4.2 können integraler Bestandteil der jeweiligen Ausrichteinrichtung 4 oder hieran angebracht sein.

Die Fördereinrichtungen 3 werden mit einem gemeinsamen Antrieb 2.2 angetrieben, während die Ausrichteinrichtungen 4 mit einem gemeinsamen Antrieb 2.1 angetrieben. Somit laufen die Fördereinrichtungen 3 und die Ausrichteinrichtungen 4 bei einer jeweiligen Bewegung synchron. Alternativ wäre es jedoch auch denkbar, für jede Fördereinrichtung 3 und jede Ausrichteinrichtung 4 einen separaten Antrieb vorzusehen, wobei in diesem Fall eine Synchronisation der Antriebe der Fördereinrichtungen 3 einerseits und der Ausrichteinrichtungen 4 zielführend ist.

Die Ausrichtvorrichtung 1 umfasst ein in Transportrichtung R verlaufendes Lineal 7, um ein Werkstück in Transportrichtung zu führen. In der vorliegenden Ausführungsform ist das Lineal 7 an der Seite der Antriebe 2.1 und 2.2 angeordnet. Es ist jedoch auch denkbar, das Lineal an der gegenüberliegenden Seite der Ausrichtvorrichtung 1 vorzusehen.

Nachfolgend wird ein möglicher Verfahrensablauf detaillierter beschrieben.

In der dargestellten Situation wird das Werkstück 6 mittels der Fördereinrichtungen 3, insbesondere Förderriemen oder Transportkette, in einer Transportrichtung R bewegt. Gleichzeitig werden die Ausrichteinrichtungen 4 und die darauf befindlichen ersten Nocken 4.1 in die Transportrichtung R bewegt.

Dabei ist die Geschwindigkeit der Fördereinrichtungen 3 höher als die Geschwindigkeit der Ausrichteinrichtungen 4 eingestellt. Das Werkstück 6 wird mit Hilfe der Nocken 4.1 an der ersten Querseite 6.1 ausgerichtet. Die erste Querseite 6.1 ist die in Transportrichtung vordere Seite des Werkstücks 6.

Bei dieser Ausführungsform sind die ersten Nocken 4.1 so vorgesehen, dass sie sich in Transportrichtung R auf einer gleichen Höhe befinden. Somit bilden die nebeneinander angeordneten ersten Nocken gewissermaßen ein Ausrichtlineal. Dadurch wird das Werkstück 6, welches in Transportrichtung R eingeführt wird, an der ersten Querseite 6.1 ausgerichtet.

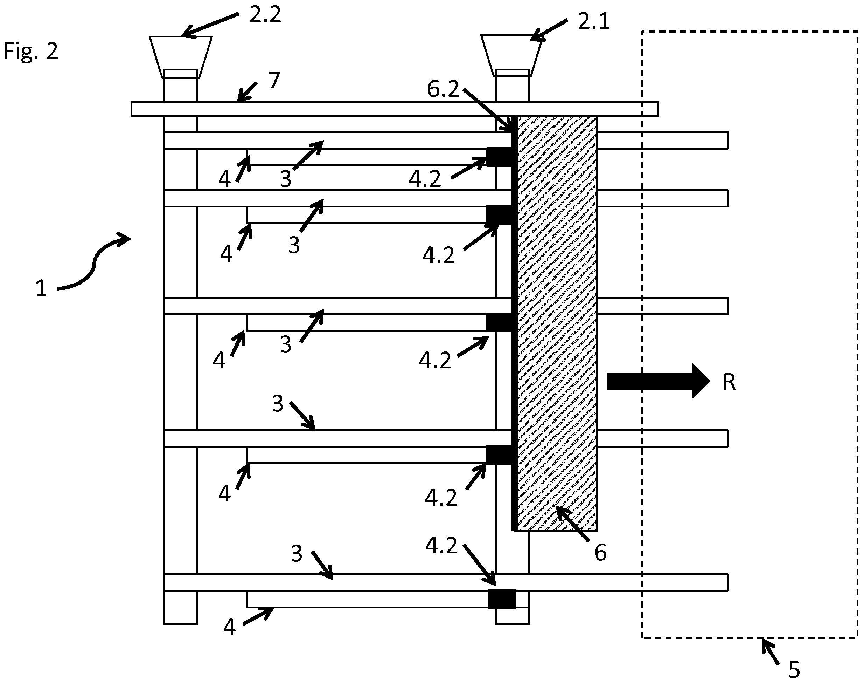

Fig. 2 und Fig. 3 b) zeigen schematisch eine weitere Situation der Ausrichtvorrichtung 1 gemäß der vorliegenden Erfindung, wobei Fig. 3 b) eine verkürzte Seitenansicht der Ausführungsform darstellt.

Nach dem Ausrichten der ersten Querseite 6.1 des Werkstücks 6 wird die Geschwindigkeit der Ausrichteinrichtungen 4 erhöht. Somit werden auch die ersten Nocken 4.1 vom ausgerichteten Werkstück 6 weg bewegt. Durch die Bewegung der Ausrichteinrichtungen 4 werden ferner die zweiten Nocken 4.2 in Richtung der zweiten Querseite des Werkstücks 6 geführt. Während dessen wird das Werkstück 6 mittels der Fördereinrichtungen 3 weiter in Transportrichtung R bewegt.

Nachfolgend nähern sich die zweiten Nocken 4.2 dem Werkstück 6 an und das Werkstück 6 wird während dessen Bewegung mittels der zweiten Nocken 4.2 an der zweiten Querseite 6.2 erneut ausgerichtet.

Hierbei sind mindestens zwei zweite Nocken 4.2 vorgesehen, die sich in Transportrichtung R auf einer gleichen Höhe befinden. Dadurch wird das Werkstück 6, welches mit der Seite des Werkstücks 6 quer in Transportrichtung R eingeführt wird, an der zweiten Querseite 6.2 ausgerichtet.

Das Einführen des ausgerichteten Werkstücks 6 zur Maschine 5 selbst und das beschriebene Verfahren zum Ausrichten erfolgen, während das Werkstück 6 mit den Fördereinrichtungen 3 bewegt wird.

## Patentansprüche

1. Verfahren zum Ausrichten eines Werkstücks (6), umfassend die Schritte:
- Bewegen des Werkstücks (6) mittels einer Fördereinrichtung (3) in einer Transportrichtung (R),
- Ausrichten des bewegten Werkstücks (6) mittels zumindest einer ersten Ausrichteinheit (4.1), insbesondere zumindest eines ersten Nockens (4.1), an einer ersten Querseite (6.1) des Werkstücks (6), und
- Ausrichten des bewegten Werkstücks (6) an einer zweiten Querseite (6.2) des Werkstücks (6).

2. Verfahren nach Anspruch 1, **dadurch gekennzeichnet, dass** das Werkstück (6) mit zumindest einer zweiten Ausrichteinheit (4.2), insbesondere zumindest einem zweiten Nocken (4.2), an der zweiten Querseite (6.2) ausgerichtet wird.

3. Verfahren nach einem der vorangegangenen Ansprüche, **dadurch gekennzeichnet, dass**, nach dem Ausrichten an der ersten Querseite, die zumindest eine erste Ausrichteinheit (4.1) weg von der ersten Querseite (6.1) des Werkstücks (6) bewegt wird.

4. Verfahren nach Anspruch 2 oder 3, **dadurch gekennzeichnet, dass** das Werkstück durch die zumindest eine zweiten Ausrichteinheit (4.2), insbesondere den zumindest einen zweiten Nocken (4.2), in die Bearbeitungsmaschine eingeführt wird.

5. Verfahren nach einem der vorangegangenen Ansprüche, **dadurch gekennzeichnet, dass** das Bewegen des Werkstücks (6) mittels mehrerer Fördereinrichtungen (3) erfolgt, die bevorzugt mit einem Antrieb (2.2) angetrieben sind, wobei die Fördereinrichtungen (3) insbesondere als Förderriemen oder Transportkette ausgebildet sind.

6. Verfahren nach einem der vorangegangenen Ansprüche, **dadurch gekennzeichnet, dass** das Werkstück (6) nach dem Ausrichten an der zweiten Querseite (6.2) in eine Bearbeitungsmaschine (5) eingeführt wird, wobei bevorzugt ist, dass das Werkstück (6) in der Bearbeitungsmaschine (5) an einer Oberseite und/oder Unterseite bearbeitet wird.

7. Verfahren nach einem der vorangegangenen Ansprüche, **dadurch gekennzeichnet, dass** sich die zumindest eine erste Ausrichteinheit (4.1) während des Schritts des Bewegens des Werkstücks (6) zunächst langsamer als die Fördereinrichtung (3) bewegt und nach dem Ausrichten an der ersten Querseite (6.1) die Geschwindigkeit der zumindest einen ersten Ausrichteinheit (4.1) erhöht wird.

8. Verfahren nach einem der vorangegangenen Ansprüche, **dadurch gekennzeichnet, dass** zum Ausrichten des Werkstücks (6) an der ersten Querseite (6.1) zumindest zwei erste Ausrichteinheiten (4.1) verwendet werden, und/oder dass zum Ausrichten des Werkstücks (6) an der zweiten Querseite (6.2) zumindest zwei zweite Ausrichteinheiten (4.2) verwendet werden.

9. Verfahren nach einem der vorangegangenen Ansprüche, **dadurch gekennzeichnet, dass** die erste Querseite (6.1) in Transportrichtung (R) weist und die zweite Querseite (6.2) entgegen der Transportrichtung (R) weist.

10. Ausrichtvorrichtung (1), insbesondere zur Durchführung des Verfahrens gemäß einem der vorangegangenen Ansprüche, aufweisend:
eine Fördereinrichtung (3), insbesondere einen Förderriemen oder eine Transportkette, zum Bewegen eines Werkstücks (6) in einer Transportrichtung (R),
eine Ausrichteinrichtung (4), die eingerichtet ist, das bewegte Werkstück (6) an einer ersten Querseite (6.1) des bewegten Werkstücks (6) und an einer zweiten Querseite (6.2) des bewegten Werkstücks (6) auszurichten.

11. Ausrichteinrichtung (4) nach Anspruch 10, **dadurch gekennzeichnet, dass** die Ausrichteinrichtung (4) zumindest einen umlaufenden Riemen oder eine umlaufende Kette umfasst, wobei bevorzugt ist, dass am umlaufenden Riemen oder der umlaufenden Kette eine erste Ausrichteinheit (4.1), insbesondere zumindest ein erster Nocken (4.1), vorgesehen ist.

12. Ausrichteinrichtung (4) nach Anspruch 11, **dadurch gekennzeichnet, dass** am umlaufenden Riemen oder an der umlaufenden Kette eine zweite Ausrichteinheit (4.2), insbesondere ein zweiter Nocken (4.2), vorgesehen ist, wobei bevorzugt ist, dass die erste Ausrichteinheit (4.1) und die zweite Ausrichteinheit (4.2) entlang des umlaufenden Riemens oder der umlaufenden Kette im Wesentlichen gleich beabstandet sind.

13. Ausrichtvorrichtung (1) nach einem der Ansprüche 11-12, **dadurch gekennzeichnet, dass** mehrere Ausrichteinrichtungen (4) vorgesehen sind, die, quer zur Transportrichtung (R), voneinander beabstandet sind.

14. Ausrichtvorrichtung (1) nach einem der Ansprüche 11-13, **dadurch gekennzeichnet, dass** eine Fördereinrichtung (3) mit einer Ausrichteinrichtung (4) paarweise angeordnet ist und/oder
die Ausrichteinrichtungen (4) mittels einem gemeinsamen Antrieb (2.1) angetrieben werden.

15. Ausrichtvorrichtung (1) nach einem der Ansprüche 11-14, umfassend eine Steuereinrichtung, die eingerichtet ist, die Ausrichteinrichtung (4) zum Ausrichten des Werkstücks (6) an einer ersten Querseite (6.1) und einer zweiten Querseite (6.2) zu steuern.
